(19) Europäisches Patentamt
European Patent Office
Office européen des brevets

(11) **EP 4 708 252 A1**

(12) **EUROPEAN PATENT APPLICATION**

(43) Date of publication:
**11.03.2026 Bulletin 2026/11**

(21) Application number: **25197722.9**

(22) Date of filing: **22.08.2025**

(51) International Patent Classification (IPC):
**G08G 5/21** (2025.01)     **G08G 5/54** (2025.01)
**G08G 5/72** (2025.01)     **G08G 5/80** (2025.01)

(52) Cooperative Patent Classification (CPC):
**G08G 5/80; G08G 5/21; G08G 5/54; G08G 5/723**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.08.2024 US 202418815421**

(71) Applicant: **The Boeing Company**
**Arlington, VA 22202 (US)**

(72) Inventors:
• **LEE, Joonho**
**Arlington, 22202 (US)**
• **SCHWIESOW, Michael Brandon**
**Arlington, 22202 (US)**
• **MEDINA, Jose Alberto**
**Arlington, 22202 (US)**

(74) Representative: **Boult Wade Tennant LLP**
**Salisbury Square House**
**8 Salisbury Square**
**London EC4Y 8AP (GB)**

(54) **ENSURING ACCURATE RUNWAY INCURSION DETERMINATION THROUGH PROBABILISTIC DECISION MAKING ON TRACKED OBJECT STATES**

(57)     A system and method for achieving a high confidence threshold when asserting that the runway is clear of obstacles. A landing aircraft periodically scans runway regions to confirm, track, and propagate trajectories of self-reporting and non-cooperative objects. An incurring object, appearing as a very tiny artifact, is unlikely to be detected in every sensor frame. The system and method propagate the trajectories of the incurring objects to confirm that the objects will clear the runway before the aircraft lands by tracking the objects and using a probabilistic decision maker.

FIG. 1

## Description

FIELD OF THE DISCLOSURE

The present disclosure is directed to airport runway incursion detection.

BACKGROUND

Of the many phases of flight, the landing phase of flight is one that is not optional. It is a period of high workload for the pilots and high risk for the aircraft. Incursions onto the runway designated for landing are relatively rare. However, the potential consequences when an incursion occurs can be catastrophic. Airport runway incursions are currently primarily addressed by humans such as, for example, but not limited to, pilots and air traffic controllers. Such assessment is made based on, for example, visual cues, radio communications, and situational understanding, and through pilot and air traffic control training, an understanding of when an incursion is occurring. The class of expected objects includes vehicles (including aircraft, rotorcraft, and ground vehicles), humans, and wildlife. Challenges with detecting an incursion include that the assessment has to be done at high speeds, and the environment is dynamic, including a moving detection platform (the aircraft), moving intruders, and changing seasons and airports. In 2021, the Federal Aviation Administration (FAA) reports 1627 runway incursion incidents over 5217 airports in the United States. In the first quarter of 2023, there were seven runway incursions experienced by seven different airlines in the United States.

Existing solutions attempt to employ an end-to-end machine learning model for decision making. While it is possible to evaluate the output of such a model and compare the performance against probability requirements, it is not currently possible to build probability guarantees into such a model. There is also concern about whether such a model will continue to meet the probability requirements in a new environment.

What is needed is a system and method for integrating low probability detections over time to ensure the probability requirements for missing a runway incursion (probability of false negative) or reporting a non-existent incursion (probability of false positive) are met. Furthermore, it solves the problem of predicting future object trajectories, enabling distinguishing between objects currently on the runway (but not causing an incursion), on-going incursions requiring a go-around to prevent a potential collision, and on-going incursions that are likely to clear in time for a safe landing.

What is needed is, in an autonomous system, a method for tracking objects and a decision maker for a vision detection system. Aircraft and automotive companies that try to have autonomy functions based on a camera system can employ the proposed method. What is needed is a system that can be used with an aircraft autonomy system, or can provide a warning system for runway incursions for human pilots to enable safe landings. What is needed is a system that can be used on current and future aircraft.

SUMMARY

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. One example includes a method for determining a probability of runway incursion (for example, during aircraft landing). The method includes integrating object detections over time by detecting new and existing object tracks (for example, candidate new and existing object tracks), assigning the object detections to the object tracks, and filtering the object detections. The method includes estimating an object state based on the integrated detections, predicting future object motion and trajectory previews based on the estimated object state, a dynamic model, and a track history, determining the probability of the runway incursion based on the predicted future object motion. Detecting new and existing object tracks over time may be adapted to new environments based on accuracy of the probability. Other examples include corresponding computer systems, apparatus, and computer programs recorded on one or more computer storage devices, each configured to perform the actions of the methods.

Examples may include one or more of the following features. Detecting new and existing object tracks may include accessing the track history, sensor measurements associated with the new and existing object tracks, and the trajectory previews. The method may include detecting and tracking non-cooperative objects in a pre-selected region during the aircraft landing, and determining the probability of the runway incursion based on vision detection probabilities, a number of scans of the pre-selected region associated with the aircraft landing, a number of updates to the detected existing and new tracks of objects, a pre-selected false negative threshold, and a pre-selected false positive threshold. The statistical gating includes a rectangular gate based on a state covariance to filter the detection considered for assignment, where the auction algorithm is configured to assign using a distance between the non-cooperative objects, and where the detection that is not used to maintain an existing track is assigned to a new probationary track. The pre-selected region is based on boundaries of an airport runway, boundaries of a taxiway system associated with the airport runway, and boundaries of a runway safety area associated with the airport runway. The pre-selected false negative threshold may include a pre-selected maximum allowed value of a false negative. The pre-selected false positive threshold may include a maximum cumulative probability of a false positive. The method may include declaring the runway incursion when a ratio of the number of scans to the number of updates reaches a threshold based on the pre-selected false negative threshold and the pre-selected false positive threshold. The method may include filtering tracks of non-cooperating objects based on track history, sensor measurements, and trajectory previews generated by the dynamic model. The filtering can include estimating the trajectory previews of the non-cooperating objects by providing the track history to a first Kalman filter, estimating acceleration of the non-cooperating objects by providing the trajectory previews and the sensor measurements to a second Kalman filter, and smoothing the tracks of the non-cooperating objects based on providing the track history, the sensor measurements, and the estimated acceleration to a Gaussian process. The method may include: receiving the sensor measurements; estimating acceleration of the new and existing objects (for example, candidate new and existing objects); determining the trajectory previews based on the estimated acceleration; and generating a predicted state and a covariance estimate of object trajectories. Estimating acceleration of the new and existing objects may include: using a modified Kalman filter to determine the trajectory previews. The method may include smoothing the object trajectories, and obtaining an inference. Smoothing the object trajectories may include feeding the object trajectories, the sensor measurements, and the trajectory previews into a Gaussian process. Implementations of the described techniques may include hardware, a method or process, or computer software on a computer-accessible medium.

One example includes a computer system for determining a probability of runway incursion (for example, during aircraft landing). The computer system includes a hardware processor and a non-volatile storage medium storing instructions that when executed by the hardware processor perform operations may include detecting and tracking non-cooperative objects in a pre-selected region during the aircraft landing;, and determining the probability of the runway incursion based on vision detection probabilities, a number of scans of the pre-selected region associated with the aircraft landing, a number of updates to the detected existing and new tracks of objects, a pre-selected false negative threshold, and a pre-selected false positive threshold. Other examples include corresponding computer systems, apparatus, and computer programs recorded on one or more computer storage devices, each configured to perform the actions of the methods.

Examples may include one or more of the following features. The computer system may include filtering tracks of non-cooperating objects based on track history, sensor measurements, and trajectory previews generated by a dynamic model. The filtering may include estimating the trajectory previews of the non-cooperating objects by providing the track history to a first Kalman filter; estimating acceleration of the non-cooperating objects by providing the trajectory previews and the sensor measurements to a second Kalman filter, smoothing the tracks of the non-cooperating objects based on providing the track history, the sensor measurements, and the estimated acceleration to a Gaussian process, integrating the object detections over time by detecting new and existing object tracks (for example, candidate new and existing object tracks), assigning the object detections to the object tracks, and filtering the object detections, estimating an object state based on the integrated detection, predicting future object motion and trajectory previews based on the estimated object state, the dynamic model, and the track history, determining the probability of the runway incursion based on the predicted future object motion, and adapting the detection over time to new environments based on accuracy of the probability. Implementations of the described techniques may include hardware, a method or process, or computer software on a computer-accessible medium.

Some examples include a computer program product for determining a probability of runway incursion (for example, during aircraft landing). The computer program product includes instructions for performing operations including detecting and tracking non-cooperative objects in a pre-selected region during the aircraft landing, determining the probability of the runway incursion based on vision detection probabilities, a number of scans of the pre-selected region associated with the aircraft landing, a number of updates to the detected existing and new tracks of objects, a pre-selected false negative threshold, and a pre-selected false positive threshold. The operations include filtering tracks of non-cooperating objects based on track history, sensor measurements, and trajectory previews generated by a dynamic model. The filtering may include estimating the trajectory previews of the non-cooperating objects by providing the track history to a first Kalman filter, estimating acceleration of the non-cooperating objects by providing the trajectory previews and the sensor measurements to a second Kalman filter, smoothing the tracks of the non-cooperating objects based on providing the track history, the sensor measurements, and the estimated acceleration to a Gaussian process. The operations may also include integrating the object detections over time by detecting new and existing object tracks (for example, candidate new and existing object tracks), assigning the object detections to the object tracks, and filtering the object detections. The operations may also include estimating an object state based on the integrated detection, predicting future object motion and trajectory previews based on the estimated object state, the dynamic model, and the track history, determining the probability of the runway incursion based on the predicted future object motion. The operations may also include adapting the object detections over time to new environments based on accuracy of the probability. Other examples include corresponding computer systems, apparatus, and computer programs recorded on one or more computer storage devices, each configured to perform the actions of the methods.

It is to be understood that both the foregoing general description and the following detailed description are exemplary and explanatory only and are not restrictive of the present teachings, as claimed.

BRIEF DESCRIPTION OF THE DRAWINGS

The accompanying drawings, which are incorporated in and constitute a part of this specification, illustrate examples of the present teachings and together with the description, serve to explain the principles of the present teachings.

FIG. 1 is a schematic block diagram of an architecture of combined tracking and decision systems;
FIG. 2 is a schematic block diagram showing the components of the tracking system;
FIG. 3 is a schematic block diagram of the track filter module;
FIG. 4 is a pictorial comparison between a conventional Kalman Filter and the track filter;
FIG. 5 is a pictorial example of four consecutive scans (the example requirement number) of the same airport segment;
FIG. 6 is a pictorial output of a system and method, runway clear on the left, runway incursion on the right; and
FIG. 7 is a flowchart of a method for determining runway incursion.

It should be noted that some details of the figures have been simplified and are drawn to facilitate understanding rather than to maintain strict structural accuracy, detail, and scale.

DESCRIPTION

Reference will now be made in detail to the present teachings, examples of which are illustrated in the accompanying drawings. In the drawings, like reference numerals have been used throughout to designate identical elements. In the following description, reference is made to the accompanying drawings that form a part thereof, and in which is shown by way of illustration specific examples of practicing the present teachings. The following description is, therefore, merely exemplary.

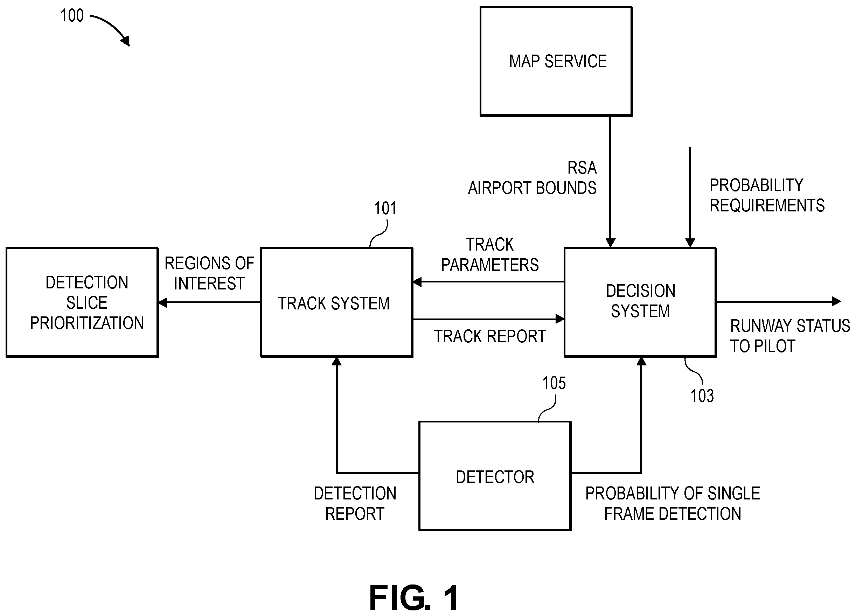

Referring now to FIG. 1, to have a safe landing on a runway, it is critical to check whether or not there are objects in runway areas. A system 100 in accordance with examples of the present disclosure includes a track system 101 and a decision system 103 that provide warnings for pilots or signals for an autonomous planning and control module. A detection system for landing on a runway frequently loses sight of the detected object because the perceived size of objects on runway areas from the aircraft collecting the visual data is quite small. The track system 101 and the decision system 103 (1) integrate detection over time, (2) improve object state estimation, and (3) predict future object motion.

The term "runway" is used herein to include a defined area for the landing and takeoff of aircraft, taxiways for ground movement of aircraft/taxiing, and areas such as blast pads and overrun areas. The surface of the runway can be of natural material (such as dirt, water, or ice) or another type of material (such as asphalt or concrete). A runway can include a water surface, a strip for aircraft landing training that is adjacent to a larger runway, a vertiport, or a heliport. Aircraft can include flying vehicles such as, for example, but not limited to including, commercial aircraft, private aircraft, military aircraft, watercraft, and helicopter and vertical take-off and landing aircraft, among other types of flying and hovering vehicles. Runways vary in dimensions, for example, a small runway can be 800 feet (240 m) long and 26 feet (8 m) wide, or a large runway can be 40,000 feet (12,000 m) long and 900 feet (275 m) wide.

Visual runways may or may not have visual markings. Non-precision instrument runways may include visual markings such as centerlines for horizontal position guidance, aiming points for vertical position guidance, and buoys. Precision instrument runways include blast pad and overrun areas, beginning and ending designated space markers, centerlines, aiming points, buoys, and other horizontal and vertical approach guidance fiducials. There are, for example, single runways, parallel runways, intersecting runways, and open-V runways.

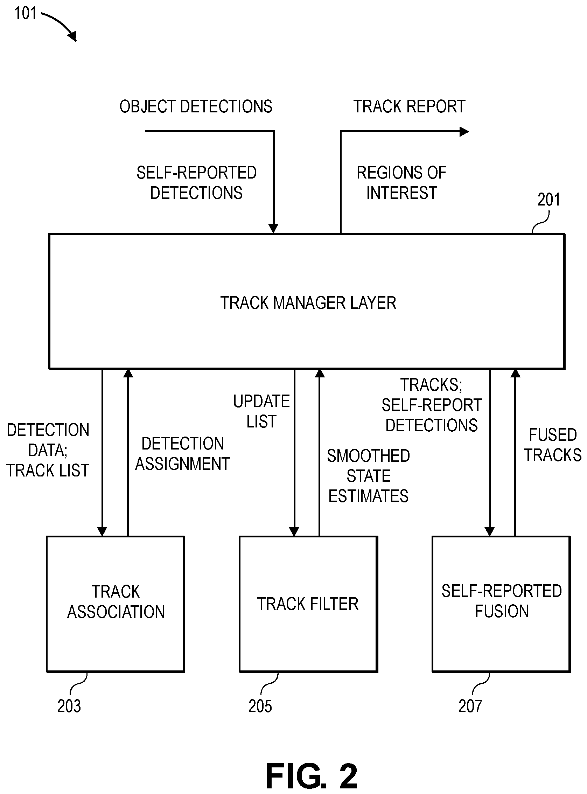

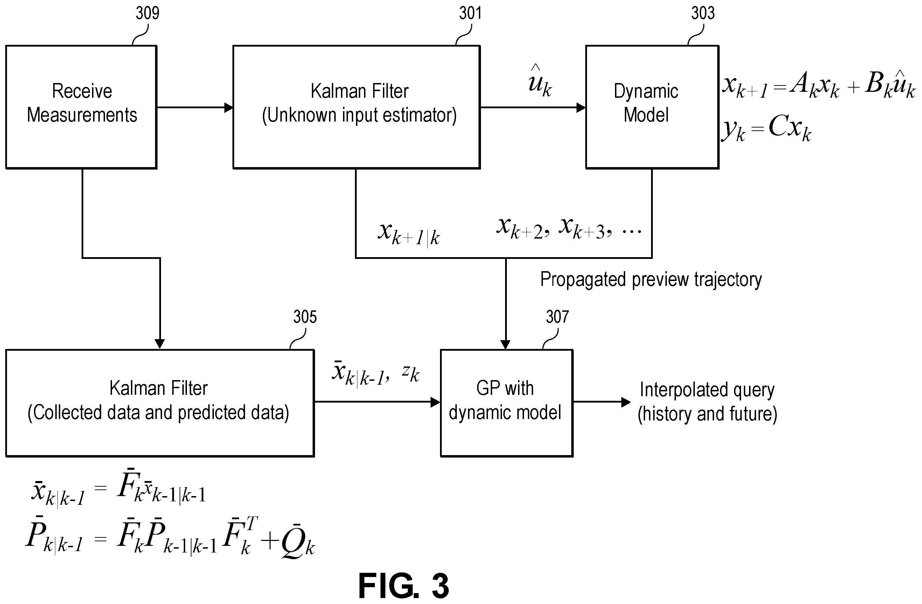

Referring now to FIG. 2, in some configurations, the track system 101 includes, but is not limited to including a track manager 201, a track association 203, a track filter 205, and self-reported fusion 207. The track manager 201 maintains an internal track database of present and past object states and provides an interface layer to external system components. The track manager 201 also coordinates communication between internal subsystems, and provides a homography function that enables compensation for camera motion. The track association 203 assigns detection to existing and new tracks using, for example, but not limited to, statistical gating and an auction algorithm. In some configurations, when statistical gating is used, for existing tracks, a rectangular gate based on the state covariance is used. In some configurations, an auction algorithm, which handles the actual assignment using distance between objects, is used to filter the detection considered for assignment. Object detections that are not used to maintain an existing track are assigned to new probationary tracks for future consideration. An updated list of object detections is provided to the track filter 205 (described in FIG. 3), which returns smoothed state estimates. Self-reported detections are provided to a self-reported fusion system that provides a list of fused tracks to the track manager layer. Based on detecting and tracking non-cooperative objects on runway areas, the decision system 103 (FIG. 1) employs detection probabilities from a detector 105 (FIG. 1) to estimate runway incursion.

Referring now to FIG. 3, inputs to the track filter 205 include, but are not limited to including, track history data, sensor measurements 309, and trajectory previews. In some configurations, trajectory previews are generated by a Gaussian process 307 with dynamic model. In some configurations, the track filter 205 includes, but is not limited to including, two Kalman Filters 301/305 and a Gaussian process 307. The first Kalman filter 301 receives the sensor measurements 309 and provides acceleration estimates using the prediction model inside of the Kalman Filter. The second Kalman Filter 305 also receives the sensor measurements 309 and the acceleration estimates of the objects. The estimates are used for previews. The second Kalman Filter 305 also provides intimidate state estimates between history and current measurements. The trajectories from history, current sensor measurements, and previews are fed into the Gaussian process 307 to smooth out trajectories as well as to obtain an inference.

Continuing to refer to FIG. 3, the preview dynamic model in the discrete-time system is

$$x_{k+1} = A_k x_k + B_k u_k, \quad y_k = C_k x_k \tag{1}$$

$$x_k = \begin{bmatrix} x_{1,k}, x_{2,k} \end{bmatrix}^T$$

where $u_k$ is an input; $y_k$ is the output i.e., the measurement; and the system matrices are

$$A_k = \begin{bmatrix} 1 & \Delta t \\ 0 & 1 \end{bmatrix}, \quad B_k = \begin{bmatrix} 0 \\ 1 \end{bmatrix}, \quad C_k = \begin{bmatrix} 1 & 0 \end{bmatrix} \tag{2}$$

A modified Kalman Filter in accordance with examples of the present disclosure is designed to estimate object acceleration and to generate the prediction state as follows. The predicted state and covariance estimates are

$$\hat{x}_{k|k-1} = F_k x_{k-1|k-1}, \quad \hat{P}_{k|k-1} = F_k P_{k-1|k-1} F_k^T + Q_k \tag{3}$$

where the estimate states are

$$\hat{x}_{k|k-1} = \begin{bmatrix} \hat{x}_{1,k|k-1}, \hat{x}_{2,k|k-1}, \hat{u}_{k|k-1} \end{bmatrix}^T$$

$$x_{k|k-1} = \begin{bmatrix} x_{1,k|k-1}, x_{2,k|k-1}, \hat{u}_{k-1|k-1} \end{bmatrix}^T \tag{4}$$

The system matrices $F_k$ and $H_k$ and the noise covariance $Q_k$ are

$$F_k = \begin{bmatrix} 1 & \Delta t & \dfrac{\Delta t^2}{2} \\ 0 & 1 & \Delta t \\ 0 & 0 & 1 \end{bmatrix}, \quad H_k = [1, 0, 0,], \quad Q_k = \begin{bmatrix} \sigma_x^2 \dfrac{\Delta t^4}{4} & \sigma_x^2 \dfrac{\Delta t^3}{3} & \sigma_x^2 \dfrac{\Delta t^2}{2} \\ \sigma_x^2 \dfrac{\Delta t^3}{3} & \sigma_x^2 \dfrac{\Delta t^2}{2} & \sigma_x^2 \Delta t \\ \sigma_x^2 \dfrac{\Delta t^2}{2} & \sigma_x^2 \Delta t & \sigma_x^2 \end{bmatrix} \tag{5}$$

The update processes for the updated state and covariance are as follows. The innovation and innovation covariance are

$$\tilde{y}_k = z_k - H_k \hat{x}_{k|k-1}, \quad S_k = H_k \hat{P}_{k|k-1} H_k^T + R_k \quad (6)$$

where the measurement covariance $R_k$ is $R_k = \sigma_m^2$. The optimal Kalman gain is

$$K_k = \hat{P}_{k|k-1} H_k^T S_k^{-1} \quad (7)$$

The updated state and covariance estimations are

$$x_{k|k} = \hat{x}_{k|k-1} + K_k \tilde{y}_k, \quad P_{k|k} = (I - K_k H_k) \hat{P}_{k|k-1} \quad (8)$$

The measurement post-fit residual is

$$\tilde{y}_{k|k} = z_k - H_k x_{k|k} \quad (9)$$

To generate the extra state between the current measurement and previews, the Kalman Filter prediction is used as

$$\hat{x}_{k+1|k} = F_k x_{k|k} + B_k \hat{u}_k \quad (10)$$

To obtain the previews, the accelerate estimate, $\hat{u}_k$ is fed into the dynamic model in Equation (1). In some configurations, a method in accordance with examples of the present disclosure is designed in the discrete time system. The previews are generated based on the estimates $\hat{u}_k$ and the dynamic model 303 in Equation (1) by iterating the following method:

$$x_{k+1} = A_k x_k + B_k \hat{u}_k, \quad y_k = C_k x_k \quad (11)$$

The iteration number can be chosen based on the application. In some configurations, four previews, $x_{k+2}, \ldots, x_{k+6}$ are generated with four iterations of Equation (11).

A second Kalman Filter 305 is used to obtain the history based on the filter delays. The predicted state and covariance for the Kalman Filter are

$$\bar{x}_{k|k-1} = \bar{F}_k \bar{x}_{k-1|k-1}, \quad \bar{P}_{k|k-1} = \bar{F}_k \bar{P}_{k-1|k-1} \bar{F}_k^T + \bar{Q}_k \quad (12)$$

where the system $\bar{F}_k$ and measurement noise covariance $\bar{Q}_k$ are

$$\bar{F}_k = \begin{bmatrix} 1 & \Delta t \\ 0 & 1 \end{bmatrix}, \quad \bar{Q}_k = \begin{bmatrix} \sigma_d^2 \dfrac{\Delta t^4}{4} & \sigma_d^2 \dfrac{\Delta t^3}{2} \\ \sigma_d^2 \dfrac{\Delta t^3}{2} & \sigma_d^2 \Delta t^2 \end{bmatrix} \quad (13)$$

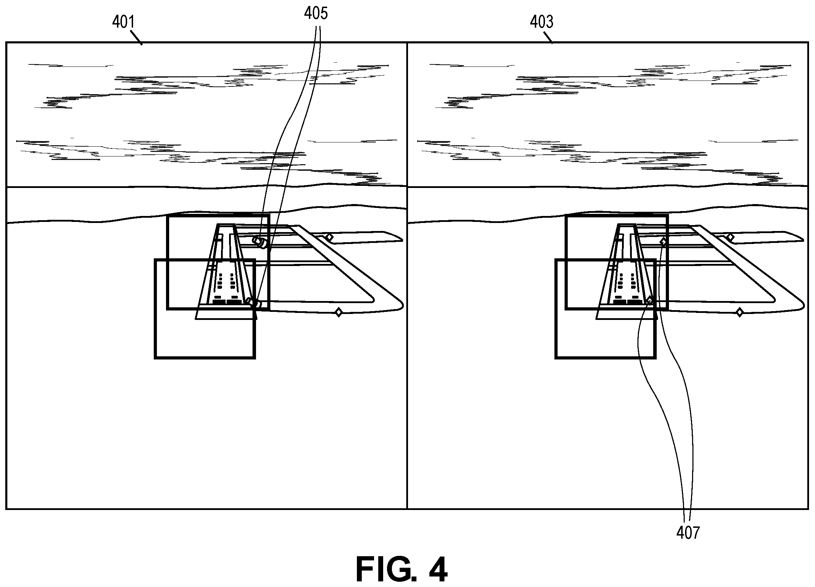

Referring now to FIG. 4, a comparison is shown between a result 401 from using a conventional Kalman Filter, and a result 403 from using the track filter in accordance with examples of the present disclosure. The lines 405, representing velocities from two objects, are not well-aligned with taxiways and indicate noise outputs, whereas lines 407 from another two objects are well-aligned with taxiways and indicate smoothed outputs.

Referring again to FIG. 3, the predicted state $\bar{x}_{k|k-1}$, the current measurement $z_k$, the extra state $\hat{x}_{k+1|k}$, and the

previews, $x_{k+2}, \ldots, x_{k+4}$ are fed into the Gaussian Process 307. By using the history, sensor measurements 309, and previews, the Gaussian Process 307 considers the history pattern as a machine learning algorithm, and the preview trajectories generated by online estimate and the dynamic model 303 provide information about and adaptations to new environments, and uncertainties of the predefined dynamic model for the Gaussian Process 307, that enable an estimate of the accuracy of the probability computations.

A method in accordance with examples of the present disclosure utilizes Gaussian Process 307 with information from the dynamic model 303 information as in Equation (1) along with the acceleration estimate $\hat{u}_k$ in Equation (8). For the Gaussian Process 307, the linear time varying stochastic differential equation is given

$$\dot{x}(t) = A(t)x(t) + B(t)u_g(t) + N(t)w(t) \qquad (14)$$

where the state $x(t)$ and the input $u_g(t)$

$$x = [x_1, y_1, x_2, y_2]^T, \; u_g(t) = [u_x, u_y]^T \qquad (15)$$

$x_1$ and $y_1$ are the positions; $x_2$ and $y_2$ are velocities. The system matrices $A(t)$, $B(t)$ and $N(t)$ are

$$A(t) = \begin{bmatrix} 0 & 0 & 1 & 0 \\ 0 & 0 & 0 & 1 \\ 0 & 0 & 0 & 0 \\ 0 & 0 & 0 & 0 \end{bmatrix}, \quad B(t) = N(t) = \begin{bmatrix} 0 & 0 \\ 0 & 0 \\ 1 & 0 \\ 0 & 1 \end{bmatrix} \qquad (16)$$

The process noise w(t) is given by

$$w(t) \sim \mathcal{N}(0, Q_c \delta(t - t')) \qquad (17)$$

a (stationary) zero-mean Gaussian Process with (symmetric, positive-definite) power-spectral density matrix, $Q_c$ and $\delta$ is the Dirac delta function. The solution to Equation (14) is

$$x(t) = \Phi(t, t_0)x(t_0) + \int_{t_0}^{t} \Phi(t, s)[B(s)u_g(s) + N(s)w(s)]ds \qquad (18)$$

where $\Phi(t, s)$ is the transition matrix

$$\Phi(t, s) = \begin{bmatrix} 1 & 0 & (t - s) & 0 \\ 0 & 1 & 0 & (t - s) \\ 0 & 0 & 1 & 0 \\ 0 & 0 & 0 & 1 \end{bmatrix} \qquad (19)$$

To obtain prior information, the mean for Equation (14) is

$$\mu(t) = E[(x)] = \Phi(t, t_0)\mu_0 + \int_{t_0}^{t} \Phi(t, s)B(s)u_g(s)ds \qquad (20)$$

The last term with respect to $w(t)$ in Equation (14) is averaged out due to the zero mean. With respect to non-cooperative objects, the acceleration input $u_g(t)$ is not available. The modified Kalman Filter in Equation (8) is used to

obtain the estimate, $\hat{u}_g(t)$, which is used in the Gaussian Process. With the estimate, $\hat{u}_g$ the vector mean $\hat{\mu}$ is written as

$$\bar{\mu} = \mathcal{A}\nu \quad (21)$$

where

$$\bar{\mu} = \begin{bmatrix} \mu(t_0) \\ \mu(t_1) \\ \vdots \\ \mu(t_M) \end{bmatrix}, \quad \nu = \begin{bmatrix} \mu_0 \\ \nu(t_1) \\ \vdots \\ \nu(t_M) \end{bmatrix}, \quad \nu_i = \int_{t_{i-1}}^{t_i} \Phi(t_i, s) B(s) \hat{u}_g(s) ds_i \quad (22)$$

$$\mathcal{A} = \begin{bmatrix} 1 & 0 & \cdots & 0 & 0 \\ \Phi(t_1, t_0) & 1 & \cdots & 0 & 0 \\ \Phi(t_2, t_0) & \Phi(t_2, t_1) & \cdots & \vdots & \vdots \\ \vdots & \vdots & \ddots & 0 & 0 \\ \Phi(t_{M-1}, t_0) & \Phi(t_{M-1}, t_1) & \cdots & 1 & 0 \\ \Phi(t_M, t_0) & \Phi(t_M, t_1) & \cdots & \Phi(t_M, t_{M-1}) & 1 \end{bmatrix} \quad (23)$$

The covariance function can be computed based on the definition

$$\mathcal{K}(t, t') = E[(x(t) - \bar{\mu}(t))(x(t') - \bar{\mu}(t'))^T] \quad (24)$$

The covariance component between two different times is

$$\mathcal{K}(t_i, t_j) = \begin{cases} \Phi(t_i, t_j) \left[ \sum_{n=0}^{j} \Phi(t_j, t_n) Q_n \Phi^T(t_j, t_n) \right] & t_j < t_i \\ \sum_{n=0}^{i} \Phi(t_i, t_n) Q_n \Phi^T(t_i, t_n) & t_i = t_j \\ \left[ \sum_{n=0}^{i} \Phi(t_i, t_n) Q_n \Phi^T(t_i, t_n) \right] \Phi^T(t_j, t_i) & t_i < t_j \end{cases} \quad (25)$$

where

$$Q_i = \int_{t_{i-1}}^{t_i} \Phi(t_i, s) N(s) Q_c N^T(s) \Phi^T(t_i, s) ds \quad (26)$$

for i = 1, ... , M and $Q_0 = \mathcal{K}_0$ . Based on the Bayes' Theorem, the Maximum A Posterior (MAP) trajectory is

$$x^* = \arg\max_x \{P(x)\prod_i P(D(x_i)|x)\} = \arg\max_x\{-\log(P(x)\prod_i P(D(x_i)|x)))\}$$

$$= \arg\min\left\{\frac{\|x-\bar{\mu}\|_{\mathcal{K}}^2}{2} + \frac{\|g(x)\|_{\Sigma_{obs}}^2}{2}\right\} \quad (27)$$

where the Gaussian Process prior $P(x)$ is

$$P(x) \propto \left\{-\frac{\|x-\bar{\mu}\|_{\mathcal{K}}^2}{2}\right\} \quad (28)$$

The likelihood $P(D(x_i)|x)$ is

$$P(D(x_i)|x) \propto \left\{-\frac{\|g(x)\|_{\Sigma_{obs}}^2}{2}\right\} \quad (29)$$

To convert the nonlinear optimization into the linear optimization, the state $x$ and the measurement function $g(x)$ are approximated as

$$x = \bar{x} + \delta x, \quad g(x) = g(\bar{x}) + C\delta x \quad (30)$$

Using Equation (30), the nonlinear optimization problem in Equation (27) is converted into

$$\delta x^* = \arg\min_{\delta x}\left\{\frac{1}{2}\|\bar{x} + \delta x - \mu\|_{\mathcal{K}}^2 + \frac{1}{2}\|g(\bar{x}) + C\delta x\|_{\Sigma_{obs}}^2\right\} \quad (31)$$

After the linear system in Equation (31) is solved, $\bar{x} = \bar{x} + \delta x^*$ is iterated until the convergence criteria are met. The linear optimization in Equation (31) is rewritten as

$$\delta x^* = (\mathcal{A}^{-T}Q^{-1}A^{-1} + C^TR^{-1}C)^{-1}(\mathcal{A}^{-T}Q^{-1}(\nu - \mathcal{A}\bar{x}) + C^TR^{-1}(z-g)) \quad (32)$$

where $Q = \text{diag}[\mathcal{K}_0, Q_1, \ldots, Q_M]$ with $Q_i$ in Equation (26) and $C = \partial g/\partial \bar{x}$. Based on the estimated dynamics in Equation (21), the sparse matrix structure, i.e., $(A^{-T}Q^{-1}A^{-1} + C^TR^{-1}C)$ is block-tridiagonal.

The decision system 103 (FIG. 1) employs a probabilistic strategy in conjunction with online adjustment of various track parameters to ensure that probability requirements are met. The decision system 103 (FIG. 1) incorporates *a priori* information about the boundaries of the airport runway and taxiway system, as well as a runway safety area (RSA) encompassing the assigned landing runway. The system determines a maximum allowed cumulative probability of a false negative. The maximum allowed cumulative probability is a system requirement value. It is used to derive the other system parameters so that the system performance will meet the requirement. False negatives occur when an object is not tracked when it is present inside the RSA, which can result in a collision. The determination of maximum allowed cumulative probability includes tracking track birth, track death, association gate size for probationary tracks, the number of required empty space observations, and detection slice allocation. One measured statistic is the maximum allowed cumulative probability of a false positive. False positives occur when a track is initialized on an object that is not actually there. From a safety standpoint, it is important to minimize their frequency since unnecessary go-arounds reduce the operational safety margins of the airport. Potential consequences also include reduced efficiency, flight delays, and loss of pilot trust. The ratio of scans to track updates is used to determine when a track is declared an incursion.

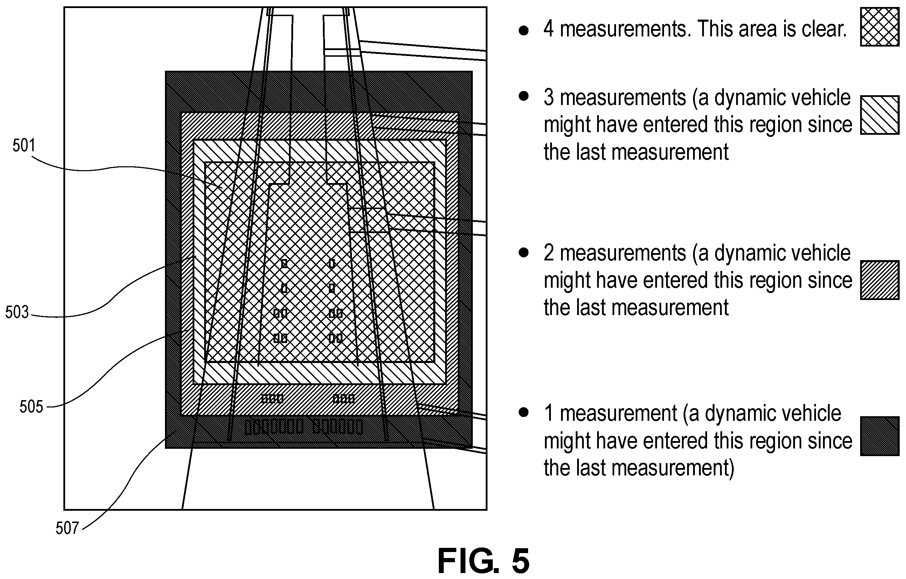

Referring now to FIG. 5, in addition to providing online updates to the track system 101 (FIG. 1), the decision system 103 (FIG. 1) maintains a map of the current number of looks at each airport segment. This is maintained as multiple polynomial contours that are updated on each scan. Slices that overlap existing contours can result in an increase in the total number of looks for that segment. The edges of each contour are shrunk in-between sensor scans because a previously undetected dynamic object may have entered the contour region. This functionality works in conjunction with the track system 101 (FIG. 1) to obtain a maximum cumulative probability of a false negative. In some configurations, the decision system 103 (FIG. 1) reports three different outcomes to the pilot. The first outcome is insufficient evidence. This indicates that the system has not integrated enough scans to meet probability criteria as shown in areas 503, 505, and 507. It may be that the "empty looks" polynomial does not encompass the entire RSA (false negative requirement). It could also indicate that a track inside the RSA does not have a high enough scan-to-track updates ratio (false positive criterion). Additional scans enable the decision to transition to a firm outcome. The outcomes are either runway clear 501, meaning there are no tracks inside the runway safety area and the segment has been scanned a pre-selected number of times to meet false negative criteria, or incursion is ongoing, which indicates a track is predicted to be within the RSA when the aircraft touches down.

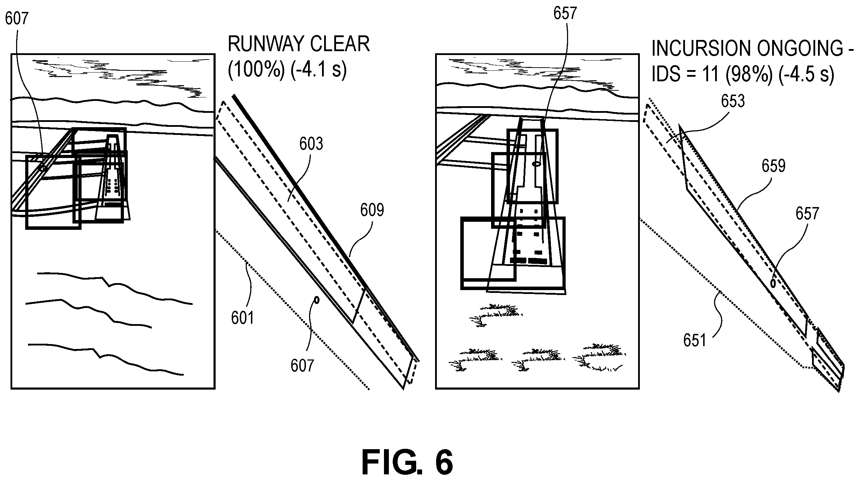

Referring now to FIG. 6, shown are two side-by-side views for situational awareness evaluation during flight testing. The images represent live camera views with slices and object detections overlaid. The banner provides the identification of the object when there is a probably incursion, the percentage of the runway safety area (RSA) that has currently been covered by a pre-selected number of scans, and the lag behind the current time. The rectangles illustrate the object in the context of the scan area. Boxes 601 and 651 are regions (referred to herein as pre-selected regions) where a pre-selected number of scans have taken place. Boxes 603 and 653 are projections into a two dimensional top-down view of slices. Boxes 609 and 659 are projections of the view of the runway from the aircraft. Points 607 and 657 are objects causing possible incursion. For objects that are being tracked but are not expected to cause incursion, a different graphic can be used to distinguish them from incurring objects. The object represented by point 607 is not expected to cause incursion, whereas the object represented by point 657 is expected to cause incursion.

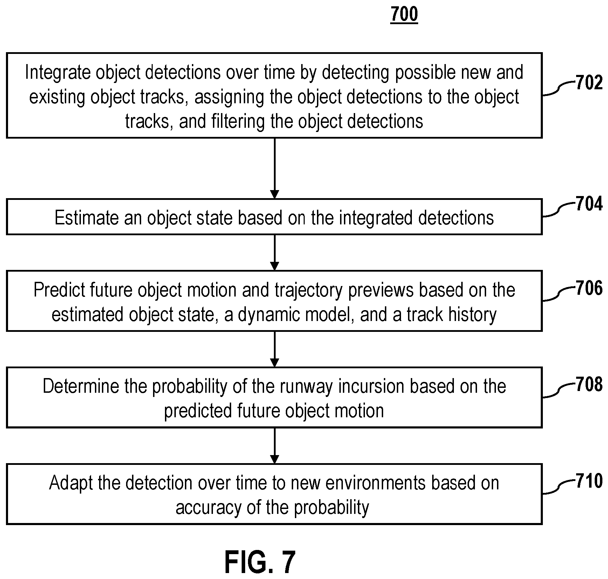

Referring now to FIG. 7, method 700 for determining a probability of runway incursion during aircraft landing can include, but is not limited to including, integrating 702 object detections over time by detecting possible new and existing object tracks, assigning the object detections to the object tracks, and filtering the object detections, estimating 704 an object state based on the integrated detections, predicting 706 future object motion and trajectory previews based on the estimated object state, a dynamic model, and a track history; determining 708 the probability of the runway incursion based on the predicted future object motion, and adapting 710 the detection over time to new environments based on accuracy of the probability.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein.

While the present teachings have been illustrated with respect to one or more implementations, alterations and/or modifications can be made to the illustrated examples without departing from the scope of the appended claims. In addition, while a particular feature of the present teachings may have been disclosed with respect to only one of several examples, such feature may be combined with one or more other features of the other examples as may be desired and advantageous for any given or particular function. As used herein, the terms "a", "an", and "the" may refer to one or more elements or parts of elements. As used herein, the terms "first" and "second" may refer to two different elements or parts of elements. As used herein, the term "at least one of A and B" with respect to a listing of items such as, for example, A and B, means A alone, B alone, or A and B. Those skilled in the art will recognize that these and other variations are possible. Furthermore, to the extent that the terms "including," "includes," "having," "has," "with," or variants thereof are used in either the detailed description and the claims, such terms are intended to be inclusive in a manner similar to the term "comprising." Further, in the discussion and claims herein, the term "about" indicates that the value listed may be somewhat altered, as long as the alteration does not result in nonconformance of the process or structure to the intended purpose described herein. Finally, "exemplary" indicates the description is used as an example, rather than implying that it is an ideal.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

**Claims**

1. A method (700) for determining a probability of runway incursion, the method (700) comprising:

   integrating (702) object detections over time by detecting new and existing object tracks, assigning the object detections to the object tracks, and filtering the object detections;
   estimating (704) an object state based on the integrated detections;
   predicting (706) future object motion and trajectory previews based on the estimated object state, a dynamic model (303), and a track history; and
   determining (708) the probability of the runway incursion based on the predicted future object motion.

2. The method (700) of claim 1, wherein detecting new and existing object tracks comprises:
   accessing the track history, sensor measurements (309) associated with the new and existing object tracks, and the trajectory previews.

3. The method (700) of claim 2, further comprising:

   detecting and tracking non-cooperative objects in a pre-selected region during the aircraft landing; and
   determining the probability of the runway incursion based on vision detection probabilities, a number of scans of the pre-selected region associated with the aircraft landing, a number of updates to the detected existing and new tracks of objects, a pre-selected false negative threshold, and a pre-selected false positive threshold; and, optionally,
   assigning the detection to the non-cooperative objects using statistical gating and an auction algorithm,

      wherein the statistical gating includes a rectangular gate based on a state covariance to filter the detection considered for assignment,
      wherein the auction algorithm is configured to assign using a distance between the non-cooperative objects, and
      wherein the detection that is not used to maintain an existing track is assigned to a new probationary track.

4. The method (700) of claim 3, wherein:

   the pre-selected region is based on boundaries of an airport runway, boundaries of a taxiway system associated with the airport runway, and boundaries of a runway safety area associated with the airport runway; and, optionally,
   the airport runway comprises: one of a defined area for the landing and takeoff of the aircraft, taxiways for ground movement of the aircraft, blast pads, and overrun areas, a water surface, a strip for aircraft landing training that is adjacent to the defined area, a vertiport, or a heliport.

5. The method (700) of any of claims 3 or 4, wherein the pre-selected false negative threshold includes a pre-selected maximum allowed value of a false negative, and wherein the pre-selected false positive threshold includes a maximum cumulative probability of a false positive.

6. The method (700) of any of claims 3 to 5, further comprising:
   declaring the runway incursion when a ratio of the number of scans to the number of updates reaches a threshold based on the pre-selected false negative threshold and the pre-selected false positive threshold.

7. The method (700) of any of claims 3 to 6, further comprising:
   filtering tracks of non-cooperating objects based on track history, sensor measurements (309), and trajectory previews generated by the dynamic model (303), the filtering including:

   estimating the trajectory previews of the non-cooperating objects by providing the track history to a first Kalman filter (301);
   estimating acceleration of the non-cooperating objects by providing the trajectory previews and the sensor measurements (309) to a second Kalman filter; and
   smoothing the tracks of the non-cooperating objects based on providing the track history, the sensor measurements (309), and the estimated acceleration to a Gaussian process.

8. The method (700) of claim 7, further comprising:

    receiving the sensor measurements (309);
    estimating acceleration of the new and existing objects;
    determining the trajectory previews based on the estimated acceleration; and
    generating a predicted state and a covariance estimate of object trajectories.

9. The method (700) of claim 8, wherein estimating (704) acceleration of the new and existing objects comprises:
    using a modified Kalman filter to determine the trajectory previews.

10. The method (700) of claim 9, further comprising:

    smoothing the object trajectories; and
    obtaining an inference.

11. The method (700) of claim 10, wherein smoothing the object trajectories comprises:
    feeding the object trajectories, the sensor measurements (309), and the trajectory previews into a Gaussian Process.

12. The method (700) of claim 11, wherein for the Gaussian Process:
    a linear time varying stochastic differential equation is

$$\dot{x}(t) = A(t)x(t) + B(t)u_g(t) + N(t)w(t) \qquad (14),$$

    wherein state $x(t)$ and input $u_g(t)$ are

$$x = [x_1, y_1, x_2, y_2]^T, \; u_g(t) = [u_x, u_y]^T \qquad (15),$$

    wherein $x_1$ and $y_1$ are object positions, and $x_2$ and $y_2$ are object velocities,
    wherein system matrices $A(t)$, $B(t)$ and $N(t)$ are

$$A(t) = \begin{bmatrix} 0 & 0 & 1 & 0 \\ 0 & 0 & 0 & 1 \\ 0 & 0 & 0 & 0 \\ 0 & 0 & 0 & 0 \end{bmatrix}, \quad B(t) = N(t) = \begin{bmatrix} 0 & 0 \\ 0 & 0 \\ 1 & 0 \\ 0 & 1 \end{bmatrix} \qquad (16),$$

    wherein process noise w(t) is

$$w(t) \sim \mathcal{N}(0, Q_c\delta(t - t')) \qquad (17),$$

    a stationary zero-mean Gaussian Process including a symmetric, positive-definite power-spectral density matrix, $Q_c$, and a Dirac delta function $\delta$, wherein a solution to Equation (14) is

$$x(t) = \Phi(t, t_0)x(t_0) + \int_{t_0}^{t} \Phi(t, s)[B(s)u_g(s) + N(s)w(s)]ds \qquad (18),$$

    wherein $\Phi(t, s)$ is a transition matrix

$$\Phi(t,s) = \begin{bmatrix} 1 & 0 & (t-s) & 0 \\ 0 & 1 & 0 & (t-s) \\ 0 & 0 & 1 & 0 \\ 0 & 0 & 0 & 1 \end{bmatrix} \quad (19),$$

wherein a mean for Equation (14) is

$$\mu(t) = E[(x)] = \Phi(t,t_0)\mu_0 + \int_{t_0}^{t} \Phi(t,s)B(s)u_g(s)ds \quad (20),$$

averaging a last term in Equation (20) with respect to $w(t)$ in Equation (14) due to a zero mean; using the second Kalman filter in Equation (8) is used to obtain an estimate of acceleration input, $\hat{u}_g(t)$, wherein vector mean $\mu$ is

$$\bar{\mu} = \mathcal{A}v \quad (21),$$

wherein

$$\bar{\mu} = \begin{bmatrix} \mu(t_0) \\ \mu(t_1) \\ \vdots \\ \mu(t_M) \end{bmatrix}, \quad \nu = \begin{bmatrix} \mu_0 \\ \nu(t_1) \\ \vdots \\ \nu(t_M) \end{bmatrix}, \quad \nu_i = \int_{t_{i-1}}^{t_i} \Phi(t_i,s)B(s)\hat{u}_g(s)ds_i \quad (22)$$

$$\mathcal{A} = \begin{bmatrix} 1 & 0 & \cdots & 0 & 0 \\ \Phi(t_1,t_0) & 1 & \cdots & 0 & 0 \\ \Phi(t_2,t_0) & \Phi(t_2,t_1) & \cdots & \vdots & \vdots \\ \vdots & \vdots & \ddots & 0 & 0 \\ \Phi(t_{M-1},t_0) & \Phi(t_{M-1},t_1) & \cdots & 1 & 0 \\ \Phi(t_M,t_0) & \Phi(t_M,t_1) & \cdots & \Phi(t_M,t_{M-1}) & 1 \end{bmatrix} \quad (23),$$

wherein a covariance function is based on

$$\mathcal{K}(t,t') = E[(x(t)-\bar{\mu}(t))(x(t')-\bar{\mu}(t'))^T] \quad (24)$$

wherein a covariance component between two different times is

$$\mathcal{K}(t_i,t_j) = \begin{cases} \Phi(t_i,t_j)\left[\sum_{n=0}^{j}\Phi(t_j,t_n)Q_n\Phi^T(t_j,t_n)\right] & t_j < t_i \\ \sum_{n=0}^{i}\Phi(t_i,t_n)Q_n\Phi^T(t_i,t_n) & t_i = t_j \\ \left[\sum_{n=0}^{i}\Phi(t_i,t_n)Q_n\Phi^T(t_i,t_n)\right]\Phi^T(t_j,t_i) & t_i < t_j \end{cases} \quad (25),$$

wherein

$$Q_i = \int_{t_{i-1}}^{t_i} \Phi(t_i, s) N(s) Q_c N^T(s) \Phi^T(t_i, s) ds$$

(26),

for i = 1, ... ,M and $Q_0 = \mathcal{K}_0$ ,
wherein a Maximum A Posterior (MAP) trajectory is

$$x^* = \arg\max_x \{ P(x) \prod_i P(D(x_i)|x) \} = \arg\max_x \{ -\log(P(x) \prod_i P(D(x_i)|x)) ) \}$$

$$= \arg\min \left\{ \frac{\|x - \bar{\mu}\|_{\mathcal{K}}^2}{2} + \frac{\|g(x)\|_{\Sigma_{obs}}^2}{2} \right\}$$

(27),

wherein Gaussian Process prior $P(x)$ is

$$P(x) \propto \left\{ -\frac{\|x - \bar{\mu}\|_{\mathcal{K}}^2}{2} \right\}$$

(28),

wherein likelihood $P(D(x_i)|x)$ is

$$P(D(x_i)|x) \propto \left\{ -\frac{\|g(x)\|_{\Sigma_{obs}}^2}{2} \right\}$$

(29),

computing the state $x$ and measurement function $g(x)$ to convert nonlinear optimization into linear optimization

$$x = \bar{x} + \delta x, \quad g(x) = g(\bar{x}) + C\delta x$$

(30);

converting a nonlinear optimization problem in Equation (27) using Equation (30)

$$\delta x^* = \arg\min_{\delta x} \left\{ \frac{1}{2} \|\bar{x} + \delta x - \mu\|_{\mathcal{K}}^2 + \frac{1}{2} \|g(\bar{x}) + C\delta x\|_{\Sigma_{obs}}^2 \right\}$$

(31);

iterating $\bar{x} = \bar{x} + \delta x^*$ until convergence criteria are met after a linear system in Equation (31) is solved; and rewriting a linear optimization in Equation (31) as

$$\delta x^* = (\mathcal{A}^{-T} Q^{-1} A^{-1} + C^T R^{-1} C)^{-1} (\mathcal{A}^{-T} Q^{-1} (\nu - \mathcal{A}\bar{x}) + C^T R^{-1} (z - g))$$

(32),

wherein $Q = \text{diag}\ [\mathcal{K}_0, Q_1, \ldots, Q_M]$ with $Q_i$ in Equation (26) and

$$C = \partial g / \partial \bar{x}.$$

13. The method (700) of claim 12, wherein the trajectory previews are generated by the dynamic model (303) comprising:

$$x_{k+1} = A_k x_k + B_k u_k, \quad y_k = C_k x_k \quad (1);$$

$$x_k = \begin{bmatrix} x_{1,k}, x_{2,k} \end{bmatrix}^T,$$

and

wherein $u_k$ is an input; $y_k$ is an output, and
wherein the system matrices are

$$A_k = \begin{bmatrix} 1 & \Delta t \\ 0 & 1 \end{bmatrix}, \quad B_k = \begin{bmatrix} 0 \\ 1 \end{bmatrix}, \quad C_k = \begin{bmatrix} 1 & 0 \end{bmatrix} \quad (2);$$

and, optionally,
wherein the predicted state and the covariance estimate of each of the object trajectories comprise:

$$\hat{x}_{k|k-1} = F_k x_{k-1|k-1}, \quad \hat{P}_{k|k-1} = F_k P_{k-1|k-1} F_k^T + Q_k \quad (3),$$

wherein the predicted state is

$$\hat{x}_{k|k-1} = \begin{bmatrix} \hat{x}_{1,k|k-1}, \hat{x}_{2,k|k-1}, \hat{u}_{k|k-1} \end{bmatrix}^T$$

$$x_{k|k-1} = \begin{bmatrix} x_{1,k|k-1}, x_{2,k|k-1}, \hat{u}_{k-1|k-1} \end{bmatrix}^T \quad (4),$$

wherein system matrices $F_k$ and $H_k$ and noise covariance $Qk$ are

$$F_k = \begin{bmatrix} 1 & \Delta t & \frac{\Delta t^2}{2} \\ 0 & 1 & \Delta t \\ 0 & 0 & 1 \end{bmatrix}, \; H_k = [1,0,0,], \quad Q_k = \begin{bmatrix} \sigma_x^2 \frac{\Delta t^4}{4} & \sigma_x^2 \frac{\Delta t^3}{3} & \sigma_x^2 \frac{\Delta t^2}{2} \\ \sigma_x^2 \frac{\Delta t^3}{3} & \sigma_x^2 \frac{\Delta t^2}{2} & \sigma_x^2 \Delta t \\ \sigma_x^2 \frac{\Delta t^2}{2} & \sigma_x^2 \Delta t & \sigma_x^2 \end{bmatrix} \quad (5),$$

wherein update processes for updated predicted state and updated covariance include an innovation and innovation covariance are

$$\tilde{y}_k = z_k - H_k \hat{x}_{k|k-1}, \quad S_k = H_k \hat{P}_{k|k-1} H_k^T + R_k \quad (6),$$

wherein measurement covariance $R_k$ is $R_k = \sigma_m^2$,

wherein an optimal Kalman gain is

$$K_k = \hat{P}_{k|k-1} H_k^T S_k^{-1} \quad (7),$$

wherein an updated predicted state and an updated covariance estimations are

$$x_{k|k} = \hat{x}_{k|k-1} + K_k \tilde{y}_k, \quad P_{k|k} = (I - K_k H_k) \hat{P}_{k|k-1} \text{ (8)},$$

wherein a measurement post-fit residual is

$$\tilde{y}_{k|k} = z_k - H_k x_{k|k} \quad \text{(9)},$$

and
wherein a prediction of the first Kalman filter (301) is

$$\hat{x}_{k+1|k} = F_k x_{k|k} + B_k \hat{u}_k \quad \text{(10)};$$

and, further optionally,
wherein the method (700) further comprises feeding an accelerate estimate, $\hat{u}_k$ into the dynamic model (303) to obtain the previews.

14. A computer program comprising computer program instructions that, when executed by one or more computer processors, cause the one or more computer processors to perform the method of any preceding claim, or a computer readable medium having stored therein such a computer program.

15. A computer system comprising one or more computer processors and computer memory having stored therein the computer program of any of claims 1 to 13.

FIG. 1

101

OBJECT DETECTIONS          TRACK REPORT

SELF-REPORTED              REGIONS OF
DETECTIONS                 INTEREST

201

```
┌──────────────────────────────────────────────────────┐
│                                                        │
│                 TRACK MANAGER LAYER                    │
│                                                        │
└──────────────────────────────────────────────────────┘
```

DETECTION        UPDATE          TRACKS;
DATA;    DETECTION  LIST          SELF-REPORT        FUSED
TRACK LIST  ASSIGNMENT            DETECTIONS         TRACKS
                     SMOOTHED
                     STATE
                     ESTIMATES

```
┌───────────────┐   ┌───────────────┐   ┌───────────────┐
│               │   │               │   │               │
│    TRACK      │   │               │   │ SELF-REPORTED │
│  ASSOCIATION  │   │ TRACK FILTER  │   │    FUSION     │
│               │   │               │   │               │
└───────────────┘   └───────────────┘   └───────────────┘
```

203              205                207

# FIG. 2

FIG. 3

- 309 Receive Measurements
- 301 Kalman Filter (Unknown input estimator)
- 303 Dynamic Model
- 305 Kalman Filter (Collected data and predicted data)
- 307 GP with dynamic model

Signals/labels:
- $\hat{u}_k$
- $x_{k+1}=A_k x_k + B_k \hat{u}_k$
- $y_k = C x_k$
- $x_{k+1|k}$
- $x_{k+2}, x_{k+3}, \ldots$
- Propagated preview trajectory
- $\bar{x}_{k|k-1}, \ z_k$
- Interpolated query (history and future)

$$\bar{x}_{k|k-1} = \bar{F}_k \bar{x}_{k-1|k-1}$$

$$\bar{P}_{k|k-1} = \bar{F}_k \bar{P}_{k-1|k-1} \bar{F}_k^{T} + \bar{Q}_k$$

EP 4 708 252 A1

**FIG. 4**

FIG. 5

- 4 measurements. This area is clear.
- 3 measurements (a dynamic vehicle might have entered this region since the last measurement
- 2 measurements (a dynamic vehicle might have entered this region since the last measurement
- 1 measurement (a dynamic vehicle might have entered this region since the last measurement)

EP 4 708 252 A1

**FIG. 6**

<u>700</u>

| |
|---|
| Integrate object detections over time by detecting possible new and existing object tracks, assigning the object detections to the object tracks, and filtering the object detections |

⌐702

| |
|---|
| Estimate an object state based on the integrated detections |

⌐704

| |
|---|
| Predict future object motion and trajectory previews based on the estimated object state, a dynamic model, and a track history |

⌐706

| |
|---|
| Determine the probability of the runway incursion based on the predicted future object motion |

⌐708

| |
|---|
| Adapt the detection over time to new environments based on accuracy of the probability |

⌐710

# FIG. 7

**EUROPEAN SEARCH REPORT**

Application Number

EP 25 19 7722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 404 174 A1 (BOEING CO [US]) 24 July 2024 (2024-07-24) * paragraphs [0004], [0006] - [0007], [0010] - [0013], [0015] - [0019], [0026] - [0029] * * figures 1, 2, 5 * ----- | 1-15 | INV. G08G5/21 G08G5/54 G08G5/72 G08G5/80 |
| A | SCHÖNEFELD J ET AL: "Runway incursion prevention systems: A review of runway incursion avoidance and alerting system approaches", PROGRESS IN AEROSPACE SCIENCES, vol. 51, 7 April 2012 (2012-04-07), pages 31-49, XP028411075, ISSN: 0376-0421, DOI: 10.1016/J.PAEROSCI.2012.02.002 [retrieved on 2012-02-27] * Abstract, chapter 2.3.3 * ----- | 1-15 | |
| A | WO 2022/170401 A1 (COEUS RES AND DEVELOPMENT PTY LTD [AU]; GU DAHE [AU]) 18 August 2022 (2022-08-18) * the whole document * ----- | 1-15 | TECHNICAL FIELDS SEARCHED (IPC)  G08G |

The present search report has been drawn up for all claims

| Place of search | Date of completion of the search | Examiner |
|---|---|---|
| The Hague | 22 January 2026 | Eitner, Christian |

EPO FORM 1503 03.82 (P04C01)

## ANNEX TO THE EUROPEAN SEARCH REPORT
## ON EUROPEAN PATENT APPLICATION NO.

EP 25 19 7722

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2026

| Patent document cited in search report | | | Publication date | Patent family member(s) | | | Publication date |
|---|---|---|---|---|---|---|---|
| EP | 4404174 | A1 | 24-07-2024 | CN | 118366339 | A | 19-07-2024 |
| | | | | EP | 4404174 | A1 | 24-07-2024 |
| | | | | US | 2024242618 | A1 | 18-07-2024 |
| WO | 2022170401 | A1 | 18-08-2022 | AU | 2022220403 | A1 | 21-09-2023 |
| | | | | EP | 4291491 | A1 | 20-12-2023 |
| | | | | US | 2025131836 | A1 | 24-04-2025 |
| | | | | WO | 2022170401 | A1 | 18-08-2022 |

EPO FORM P0459

For more details about this annex : see Official Journal of the European Patent Office, No. 12/82